# EUROPEAN PATENT APPLICATION

(11) **EP 3 989 154 A1**
(43) Date of publication of application: **27.04.2022**
(21) Application number: 20203933.5
(22) Date of filing: 26.10.2020
(51) Int. Cl.: G06Q 30/06, A45B 1/00

(54) **METHOD FOR DETERMINING A HAIR COLORATION TREATMENT**

(71) Applicant: Henkel AG & Co. KGaA, 40589 Düsseldorf (DE)
(72) Inventor: Khadem, Behnam, 40593 Düsseldorf (DE); Koenen, Annika, 41516 Grevenbroich (DE)

(57) **Abstract**

A method for determining a hair coloration treatment that changes hair from an initial color into a desired color is provided. A model for predicting hair lightening results for a bleaching agent or UV treatment is used. The model associates the lightening treatment with sets comprising a starting color and a corresponding lightened color achieved when applying the treatment onto hair having the starting color. The model determines a lightened hair color achieved when applying the lightening treatment onto the hair of the user, when the lightened hair color is close to the desired color. Otherwise an intermediate hair color is determined, such that the intermediate hair color corresponds to a starting hair color for which there exists at least one coloration composition adapted for changing the intermediate hair color into the desired color. Based thereon, a hair coloration treatment is provided.

## Description

### TECHNICAL FIELD

The invention relates to the field of personalized hair coloration treatments. The invention more particularly describes a method for determining a coloration treatment that enables achieving a desired hair color that is not achievable or not easily achievable by applying only hair coloration compositions onto the hair of the user in a single coloration step and requires a preliminary hair lightening step.

### TECHNOLOGICAL BACKGROUND

When a user intends to dye his/her hair, the process of selecting a suitable strategy to achieve the desired hair color requires taking into account many parameters that are not always well understandable to unexperienced users.

A safe approach consists in attending a hair salon to receive expert advice from a hair professional. However, the burden of deciding on a hair coloration treatment is also heavy for hair professionals.

Typically, a dyeing process involves application of a hair dye or a combination of hair dyes onto hair having an initial color with the intention of changing the initial hair color into a color corresponding to the color of the selected dye or combination of dyes.

Choosing a hair coloration product (that is to say a hair dye or a hair coloration composition that is already mixed and ready to be applied onto hair) is often a complicated task for a user or even a hair professional. This has to do with the amount of products to choose from, the complexity of the standards used by each product manufacturer in naming their hair colors and the complexity of the chemical processes occurring in hair when a dye is applied thereon.

In order to help users select a hair coloration product, methods have been described for example in documents WO2019/068636 A1 and WO2019/068635 A1, which describe methods for recommending hair coloration products that are capable of changing an initial hair color of a user into a desired hair color. These documents rely on data gathered on different hair samples having different starting hair colors in order to describe the color they change into when a dye is applied thereon.

Different hair types, and in particular hair differing in their initial hair colors will not react in the same way when a same hair coloration composition (or hair dye) is applied thereon. Although the existing tools to predict the outcome of a hair coloration treatment provides accurate information that help users or hair professionals select the right hair coloration compositions for a hair coloration treatment, some "coloration journeys" cannot be completed by applying only one hair coloration composition.

Typically, dark hair will not be able to switch from a dark tone to a light color using hair coloration compositions only. Therefore, this "coloration journey" from dark hair to light hair requires further hair treatments that existing tools do not provide. A user would therefore need to either dye or bleach his hair in a first color before finding a suitable hair coloration product to reach his/her desired hair color.

A method for determining a coloration treatment capable of changing any initial hair color into any desired hair color is therefore sought.

### SUMMARY OF THE INVENTION

To address the above need, the invention provides a method implemented by a processor for determining a hair coloration treatment adapted for changing hair of a user from an initial hair color into a desired hair color, the method comprising:
- obtaining the initial hair color of the user;
- obtaining the desired hair color of the user;
- obtaining a first model for predicting hair color lightening results for at least one hair color lightening treatment, wherein the first model associates the at least one hair color lightening treatment with sets comprising each a first starting hair color and a corresponding lightened hair color achieved when applying the hair color lightening treatment onto hair having the first starting hair color;
- determining, using the first model, one among:
   - a lightened hair color achieved when applying the at least one hair color lightening treatment onto the hair of the user, wherein the lightened hair color differs from the desired hair color by less than a first amount; and
   - an intermediate hair color obtained when applying the at least one hair color lightening treatment onto the hair of the user, wherein the intermediate hair color corresponds to a starting hair color for which there exists at least one first hair coloration composition adapted for changing the starting hair color into a dyed hair color differing from the desired hair color by less than a second amount, and
- outputting the hair coloration treatment, wherein the hair coloration treatment comprises one among: a recommendation to apply the at least one hair color lightening treatment and a recommendation to apply the at least one hair color lightening treatment combined with the at least one first hair coloration composition.

The invention overcomes the challenge of finding suitable hair "coloration journeys" by enhancing the recommendation of hair coloration treatments with hair lightening steps. Lightening of hair can for example be implemented by at least one bleaching agent or exposure of hair to ultraviolet light (typically light with wavelengths comprised between 100 nm and 400 nm, more preferable light with wavelengths ranging from 300 nm to 400 nm).
Typically, when there is no hair coloration product or hair coloration composition that is capable of changing an initial hair color into a desired hair color (for example, changing black hair into blond hair), the method of the invention determines at least one hair color lightening treatment that will either reach the desired hair color or that will reach an intermediate color for which a more traditional "hair coloration journey" using hair coloration compositions is available.
In order to determine when and how to lighten the initial hair color, the method typically determines which intermediate hair colors are associated with hair coloration compositions that are known or can be predicted as dyeing the intermediate hair color into the desired hair color. The determination of the hair lightening treatment is made using a first model, which is typically built using experimental data of previous hair lightening treatments applied to different starting hair colors and associated with achieved resulting lightened hair colors. The experimental data is advantageously analyzed using predictive analytics methods to create a continuous model providing sets comprising starting hair colors and corresponding lightened hair colors even for starting hair colors for which no data is available and also for hair lightening treatments that were not extensively tested.
Once a hair lightening treatment or a hair lightening treatment in combination with a hair coloration composition are identified, the invention outputs the result in the form of a hair coloration treatment recommendation.
It is to be noted that the first and the second amounts may advantageously correspond to the same value.

According to an embodiment, the method may further comprise:
- obtaining a second model for predicting hair coloration results for a plurality of hair coloration compositions, wherein the second model associates each hair coloration composition of the plurality of hair coloration compositions with sets comprising each a second starting hair color and a corresponding resulting hair color achieved when applying the hair coloration composition onto hair having the second starting hair color.

This second model is determined, similarly to the first model, using data acquired from tests performed using different hair coloration compositions on different hair colors. Thereby, the ability of some hair coloration compositions to dye hair into different colors (depending on the starting hair color of hair) is known. A predictive analytics tool can interpolate the data further and make predictions even for untested samples. The model is therefore advantageously not only a static database of collected hair coloration test results, but rather a continuous model describing for each of a plurality of hair coloration compositions (corresponding to existing products and optionally original hair coloration compositions corresponding to different ratios of existing hair dyes) sets of data comprising starting hair colors and associated reachable hair colors when applying the hair coloration composition.

According to an embodiment, the method may further comprise:
- determining the at least one first hair coloration composition using the second model, wherein the at least one first hair coloration composition is associated with at least one first matching set comprising the intermediate hair color of the user as the starting hair color and a resulting hair color differing from the desired hair color by less than the second amount.

The number of matching sets depends on the number of different hair coloration compositions that are capable of dyeing hair into a color deemed to be close enough to the desired hair color. A perfect match between the desired hair color and the predicted hair color when using a hair coloration composition is generally not available. It is to be noted that the selection of the intermediate color using the first model may be coupled with the determination of the number of matching sets with available intermediate colors, so that a user may choose from different hair coloration treatments and have access to at least one hair coloration treatment that is predicted to reach a color differing from the desired color by less than a second amount, which can advantageously be equal to the first amount and form the same threshold criterion for assessing color differences.

According to an embodiment, the first model may further associate the at least one hair color lightening treatment with sets comprising each the first starting hair color and a corresponding lightened hair color achieved when applying the hair color lightening treatment onto hair having the first starting hair color more than once.

Advantageously, the first model comprises for each hair color lightening treatment at least three different iteration possibilities. For example, when the hair color lightening treatment consists in the application of a bleaching agent, the first model may indicate the effect of one bleaching step on different initial hair colors, the effect of two bleaching steps on the different initial hair colors and the effect of three bleaching steps on the different initial hair colors. In case of the application of UV light to lighten hair, the same can also be done.

According to an embodiment, the first model may further associate the at least one hair color lightening treatment with at least one application parameter for applying the at least one hair color lightening treatment, wherein each of the at least one recommendation for applying the at least one hair color lightening treatment is associated with a set comprising each the first starting hair color and a corresponding lightened hair color achieved when applying the hair color lightening treatment onto hair having the first starting hair color.

According to an embodiment, the at least one application parameter for applying the at least one hair color lightening treatment may comprise one among:
- a duration of application of the at least one hair color lightening treatment onto hair of a user;
- an amount of active agent applied onto hair of a user during the hair color lightening treatment.

For example, application of UV light or of a bleaching agent during thirty minutes, forty five minutes or one hour may be an application parameter. This duration can be defined differently (five, ten, twenty minutes, half an hour for example). The setting of the intensity or wavelength range of the UV light applied to hair may be another application parameter corresponding to the "amount of active agent". A concentration of a bleaching agent can be another example of an "amount of active agent".

According to an embodiment, the hair color lightening treatment may be at least one among: application of a hair bleaching agent and exposure of hair to ultraviolet light.

According to an embodiment, the active agent may be one among a hair bleaching agent and ultraviolet light with wavelengths comprised between 100 nm and 400 nm.

According to an embodiment the method may further comprise:
- upon determining that more than one hair coloration treatment enables changing the initial hair color or the intermediate hair color into the desired hair color, selecting the hair coloration treatment comprising a lowest number of hair color lightening steps.

Bleaching steps as well as UV exposure are known to induce damage in hair fibers. Therefore, when more than one "coloration journey" is determined as compatible with the user's wish to change an initial hair color into a desired hair color, it is advantageous to prioritize hair coloration treatments that minimize hair damage.

According to an embodiment the method may further comprise:
- upon determining that more than one hair coloration treatment enables changing the initial hair color or the intermediate hair color into the desired hair color, selecting the hair coloration treatment which achieves a hair color differing from the desired hair color by a smallest amount.

When more than one "coloration journey" is determined as compatible with the user's wish to change an initial hair color into a desired hair color, a further way of classifying the compatible recommended hair coloration treatments consist in showing the ones that provide the best color match with the desired hair color. The color match can be calculated by comparing the numerical values of the predicted hair color and the desired hair color when both are represented in the same color space. Color difference would then correspond to the lowest numerical value calculated for the sum of the differences of each color component between both the predicted and desired color in the selected color space.

The invention also pertains to a system for determining a hair coloration treatment adapted for changing hair of a user from an initial hair color into a desired hair color, the system comprising:
- a user interface configured to receive as an input the initial hair color of the user and the desired hair color of the user;
- a data processing unit configured to store and run a program involving a first model for predicting hair color lightening results for at least one hair color lightening treatment, wherein the first model associates the at least one hair color lightening treatment with sets comprising each a first starting hair color and a corresponding lightened hair color achieved when applying the hair color lightening treatment onto hair having the first starting hair color;
wherein the data processing unit determines, using the inputs received from the user interface and the program, one among:
- a lightened hair color achieved when applying the at least one hair color lightening treatment onto the hair of the user, wherein the lightened hair color differs from the desired hair color by less than a first amount; and
- an intermediate hair color obtained when applying the at least one hair color lightening treatment onto the hair of the user, wherein the intermediate hair color corresponds to a starting hair color for which there exists at least one first hair coloration composition adapted for changing the starting hair color into a dyed hair color differing from the desired hair color by less than a second amount, and
wherein the data processing unit further outputs the hair coloration treatment, wherein the hair coloration treatment comprises one among: a recommendation to apply the at least one hair color lightening treatment and a recommendation to apply the at least one hair color lightening treatment combined with the at least one first hair coloration composition.

The system is configured to implement the method described above. It could for example consist of a hardware device capable of storing a program running the method, with an interface to receive user input (for example the desired hair color and optionally the current hair color). Portable telephones, tablets or computers could be used for example as objects comprising such hardware device and user interface.

According to an embodiment the system may further comprise at least one optical sensor configured to determine the initial hair color of the user from one among a picture of the user or a video stream of the user.

The at least one optical sensor may for example be the camera of a portable device, a tablet a smartphone or the webcam of a computer.

The invention also pertains to a computer program product comprising instructions for executing a method for determining a hair coloration treatment adapted for changing hair of a user from an initial hair color into a desired hair color, the method comprising:
- obtaining the initial hair color of the user;
- obtaining the desired hair color of the user;
- obtaining a first model for predicting hair color lightening results for at least one hair color lightening treatment, wherein the first model associates the at least one hair color lightening treatment with sets comprising each a first starting hair color and a corresponding lightened hair color achieved when applying the hair color lightening treatment onto hair having the first starting hair color;
   - determining, using the first model, one among:
   - a lightened hair color achieved when applying the at least one hair color lightening treatment onto the hair of the user, wherein the lightened hair color differs from the desired hair color by less than a first amount; and
   - an intermediate hair color obtained when applying the at least one hair color lightening treatment onto the hair of the user, wherein the intermediate hair color corresponds to a starting hair color for which there exists at least one first hair coloration composition adapted for changing the starting hair color into a dyed hair color differing from the desired hair color by less than a second amount, and
- outputting the hair coloration treatment, wherein the hair coloration treatment comprises one among: a recommendation to apply the at least one hair color lightening treatment and a recommendation to apply the at least one hair color lightening treatment combined with the at least one first hair coloration composition.

In other words, the invention concerns a non-transitory computer readable storage medium having stored thereon a computer program comprising instructions for execution of the method described above.

### BRIEF DESRIPTION OF THE DRAWINGS

The present disclosure will hereinafter be described in conjunction with the following drawings, wherein like numerals denote like elements, and:
Fig. 1 is a schematic representation of relationships between hair coloration treatments such as bleaching or UV exposure and their effects on different hair colors, which are part of a model used for making hair coloration result predictions;
Fig. 2 is a schematic representation of relationships between hair coloration treatments involving hair coloration compositions and their effects on different hair colors, which are part of a model used for making hair coloration result predictions;
Fig. 3 is a simplified workflow of a possible method according to an exemplary embodiment;
Fig. 4 is a modification of the workflow of figure 3;
Fig. 5 is a simplified workflow of another possible method according to an exemplary embodiment;
Fig. 6 is a schematic representation of a system configured to implement a method according to an embodiment.

### DETAILED DESCRIPTION

The invention provides a method for determining a hair coloration treatment capable of changing any starting hair color into a desired hair color regardless of the complexity of the coloration treatment required. In particular, the invention allows users having darker hair colors to easily receive appropriate hair coloration treatment recommendations for changing their hair color into lighter hair colors even when such changes require hair lightening steps and cannot be achieved only by applying hair coloration compositions (dyes) onto hair.

One aspect of the invention relies on the inclusion, into a process for determining a hair coloration treatment, of a tool capable of predicting the outcome of hair lightening treatments. Hair lightening treatments can include different types of treatments such as bleaching or exposure to ultraviolet (UV) radiation. UV light is considered as comprising wavelengths ranging from 100 nm to about 400 nm.
One tool to predict the outcome of hair lightening treatments is a model establishing for each hair lightening treatment, a set of values linking initial hair colors with corresponding achievable hair colors when applying the hair lightening treatment onto hair.
Such a model can be constructed on the basis of at least some experimental results achieved by testing different hair lightening treatments on different types of hair. The model itself can however be enhanced by interpolating the experimental data using predictive analytics tools in order to provide predictions even for hair lightening treatments and hair colors for which there are no experimental results. The term "predictive analytics" is to be understood in a broad sense and can include many different tools involving machine learning or deep learning algorithms trained on the available experimental data.

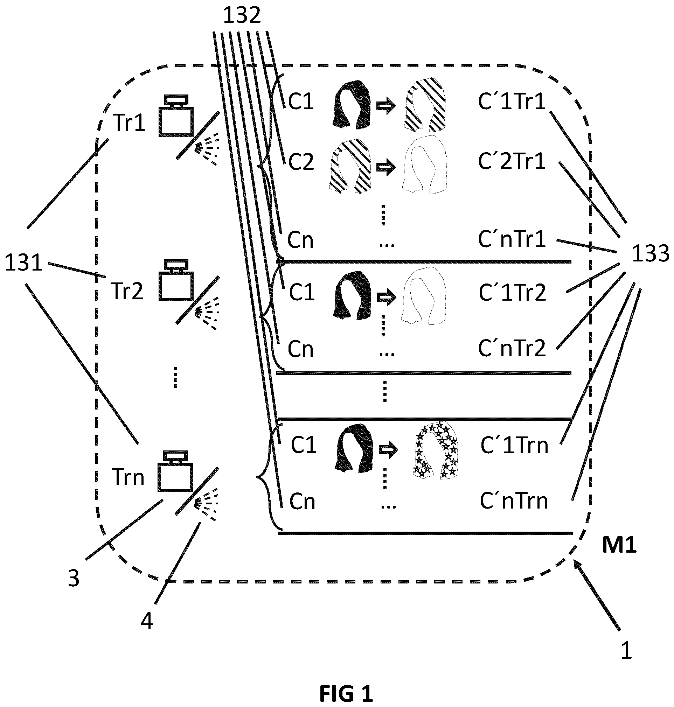

Figure 1 provides one exemplary illustration of the type of information available from a model 1 also referred to as M1. Such a model can be constructed for hair lightening treatments 131 also referred to as Tr1... Trn such as hair bleaching 3 treatments or UV exposure 4 treatments. For each of these treatments, the model 1 links first starting hair colors 132 also referred to as C1... Cn with lightened hair colors 133 also referred to as C'1Tr1... C'nTr1... C'1Trn... C'nTrn. The lightened hair colors 133 are either colors measured using experimental techniques such as for example using a spectrophotometer or a color measurement sensor or any other optical measurement technique after applying the corresponding hair lightening treatment onto the corresponding first starting hair color 132. The lightened hair colors 133 may also further comprise sets comprising first starting hair colors 132 and corresponding lightened hair colors 133 that are not obtained from experimental measurements but predicted using predicted analytics tools as explained above. Model 1, M1 is advantageously configured so that it provides a continuous prediction. In other words, for each hair lightening treatment 131 there is an infinity of sets comprising a first starting hair color 132 and a corresponding lightened hair color 133.
The model 1, M1 is constructed using predictive analytics tools as referred to above, trained using the experimental data that is available. The model M1 may be further enhanced by adding further dimensions to the inputs. Beyond the first starting hair colors 132, other hair parameters such as for example a degree of hair damage, a greyness of hair (for example expressed as a percentage over a total number of hairs), an index representative of the curliness of hair, the age of the user to whom the hair belongs, the gender of the person to whom the hair belongs the water content of hair, the porosity of hair, or whether hair was already exposed to hair lightening and/or hair coloration treatments before.
A typical example for a hair lightening treatment 131 is the application of a single dose of a hair bleaching 3 agent during forty five minutes onto hair of a user. Another typical example for a hair lightening treatment 131 is the repeated application of a dose of a same hair bleaching 3 agent during fifteen minutes, thirty minutes or forty five minutes onto hair of a user. The process can for example be repeated one or two times, so that one, two or three bleaching steps are undertaken. A typical resting time of one hour, one day, one or two weeks between two bleaching steps can be recommended.
One typical approach to bleach hair consist in mixing together a powder bleach with cream peroxide (also known as developer). Depending on the peroxide volume, each application of bleach can lift the hair color from between 1-2 levels and 3-4 levels.
A typical "single dose" of hair bleaching 3 agent may weigh between 100g and 500g, and is to be applied to hair using well known application procedures. It could for example be recommended to apply the hair bleaching 3 agent first on the tips and lengths of the hair prior to applying the to the roots as the roots tend to bleach faster.
Alternatively, a hair lightening treatment 131 can be the exposure 4 of hair to UV radiation. A typical UV exposure in view of lightening hair could be the exposure of hair to UVc radiation (comprising wavelengths ranging between 100 nm and 280 nm) and/or UVb radiation (comprising wavelengths ranging between 280 nm and 315 nm) and/or UVa radiation (comprising wavelengths ranging between 315 nm and 400 nm), during at least one hour. Preferably, only UVa is applied onto hair due to potential negative effects on hair quality of UVc and UVb radiation.

UVa intensity during exposure is typically aligned with the intensity indexes encountered for sunlight in summer in the northern hemisphere (UV index of 10 or 11), which would for example correspond to about 0,7 mW/m² at 280 nm, 80 mW/m² at 300 nm and 600 mW/m² at 325 nm.
Similarly to the possibility of predicting the outcome of a hair bleaching treatment after several bleaching steps, the model 1, M1 may also include predictions for the hair lightening effect obtained after exposing hair to UV radiation multiple times (typically between one and five times).
Typically, exposure to UV radiation achieves a lesser hair lightening effect than the application of a hair bleaching agent. In view of this property, it is possible to combine a hair bleaching method (used as a gross hair lightening method) with the subsequent exposure to UV radiation (viewed as a finer hair lightening method) in order to achieve a desired lightened hair color.

According to the invention, use of the model 1, M1 may alone enable to determine hair lightening journeys suitable for changing an initial hair color into a desired hair color. However, it is sometimes interesting to combine a hair lightening treatment with a hair coloration process involving for example dyes also called hair coloration compositions.

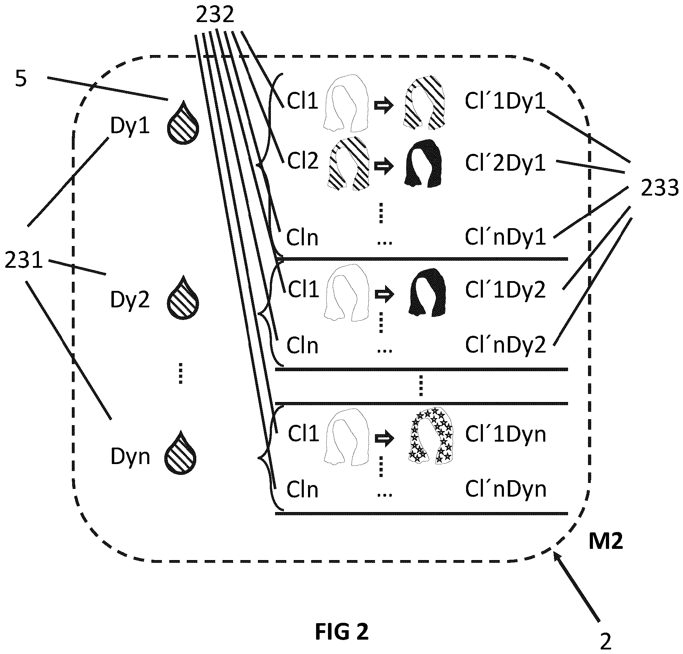

Figure 2 provides one exemplary illustration of the type of information available from a model 2 also referred to as M2. Such a model can be constructed for hair dyeing treatments 231 also referred to as Dy1... Dyn. For each of these treatments, the model 2, M2 links second starting hair colors 232 also referred to as CI1... Cln with resulting hair colors 233 also referred to as C'1Dy1...CI'nDy1...CI'1Dyn... CI'nDyn. Each hair dyeing treatment 231 is typically comprised of at least one hair coloration composition 5. The resulting hair colors 233 (which could also be called dyed hair colors since they result from the application of the hair coloration composition 5 onto a second starting hair color 232) are either colors measured using experimental techniques such as for example use of a spectrophotometer or color measurement sensor or any other optical measurement technique after applying the corresponding hair dyeing treatment onto the corresponding second starting hair color 232. The resulting hair colors 233 may also further comprise sets comprising second starting hair colors 232 and corresponding resulting hair colors 233 that are not obtained from experimental measurements but predicting using predicted analytics tools as explained above. Model 2, M2 is advantageously configured so that it provides a continuous prediction. In other words, for each hair dyeing treatment 231 there is an infinity of sets comprising a second starting hair color 232 and a corresponding resulting hair color 233.

The model 2, M2 is constructed using predictive analytics tools as referred to above, trained using the experimental data that is available. The model 2, M2 may be further enhanced by adding further dimensions to the inputs. Beyond the second starting hair colors 232, other hair parameters such as for example a degree of hair damage, a greyness of hair (for example expressed as a percentage over a total number of hair), an index representative of the curliness of hair, the age of the user to whom the hair belongs, the gender of the person to whom the hair belongs the water content of hair, the porosity of hair, or whether hair was already exposed to hair lightening and/or hair coloration treatments before.
Similarly to what has been described above in connection with model 1, M1, model 2, M2 may also comprise information regarding the outcome of hair dyeing treatments conducted more than once onto hair of a user using a same hair coloration composition 5.

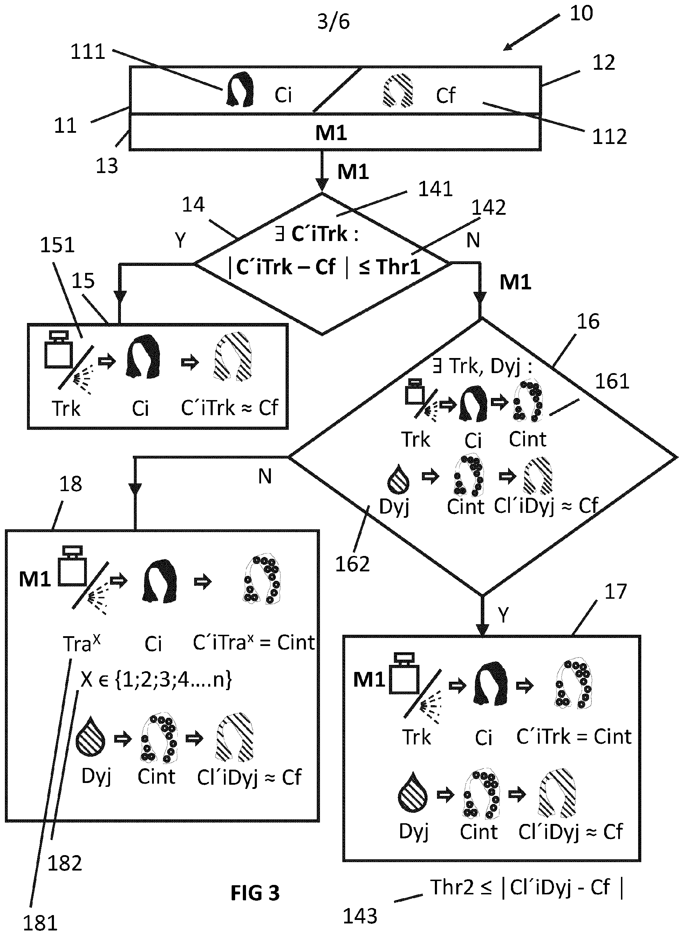

Models 1, M1, 2, M2 described above are tools used in a method according to an embodiment of the invention as schematically illustrated in the example workflow of figure 3.
According to an exemplary embodiment of the invention, a method 10 to determine a hair coloration treatment may start by obtaining 11 an initial hair color 111 of the user, obtaining 12 a desired hair color 112 of the user and obtaining 13 a first model 1, M1 for example as described above.
Using the first model 1, M1, the method then seeks to find at least one matching set comprising the initial hair color 111 as a first starting color 132 and an associated lightened hair color 141 such that the lightened hair color 141 differs from the desired hair color 112 by less than a first amount 142 at step 14.
The first amount 142 is a threshold value and can be for example set such that the numerical values across the different color channels (for example R, G and B in the RGB color space or L, a, b, in the Lab color space...) of the lightened color and the desired color differ by less than a numerical threshold (for example less than 5 or 10 on each of the color channels). The color difference can also be defined as an average across all color channels that needs to be below the set threshold.
In the event that such a matching set is found, that is to say, that model M1 is capable of providing at least one lightened hair color 141 that differs from the desired hair color by less than the first amount 142, then a hair coloration treatment 151 is output at step 15, wherein the hair coloration treatment 151 is a hair color lightening treatment enabling achieving the desired hair color from the initial hair color within the predefined threshold value which sets an error margin.

It is possible to output more than one hair coloration treatment 151 if the model M1 determines that more than one bleaching agent or UV exposure process is capable of lightening hair in order to achieve the desired hair color.
In order to structure the output that is provided, it is possible to select the hair coloration treatment 151 that leads to the lightened hair color 141 differing the least from the desired hair color 112. It is also possible to output first hair coloration treatments that require the least bleaching or UV exposure steps so that the hair of the user is subjected to less damaging treatments.
As mentioned earlier in connection with models 1, M1 and 2, M2, it is possible to determine lightened hair colors that are obtained after a repeated hair lightening treatment (repetition of a bleaching step once or more than once and/or repetition of a exposure of hair to UV radiation once or more than once). It is also possible to combine bleaching an UV exposure to access a more precise lightened hair color.
In the event that model 1, M1 fails to determine at least one matching set comprising a lightened hair color that differs from the desired hair color 112 by less than the first amount 142, the method checks whether one of the lightened hair colors accessible according to model 1, M 1 is such that there exists a known hair coloration product suitable for subsequently dyeing the lightened hair color into a dyed hair color differing from the desired hair color by less than another, second amount 143 or the first amount 142 (step 16 on figure 3).
In the event that there exists such a lightened hair color, the method outputs a hair coloration treatment which comprises a recommendation to use the hair lightening treatment that leads to such a lightened hair color (which can then be referred to as an intermediate hair color 161 or Cint as seen at step 17 of figure 3).
Should such a determination not be possible, the method may advantageously seek more complex combinations of hair lightening treatments 181 involving more than one hair lightening step 182, until an intermediate hair color Cint is found such that there exists a hair coloration product suitable for subsequently dyeing the lightened hair color into a dyed hair color differing from the desired hair color by less than a second amount 143 that can be equal to the first amount 142 (step 18 on figure 3).

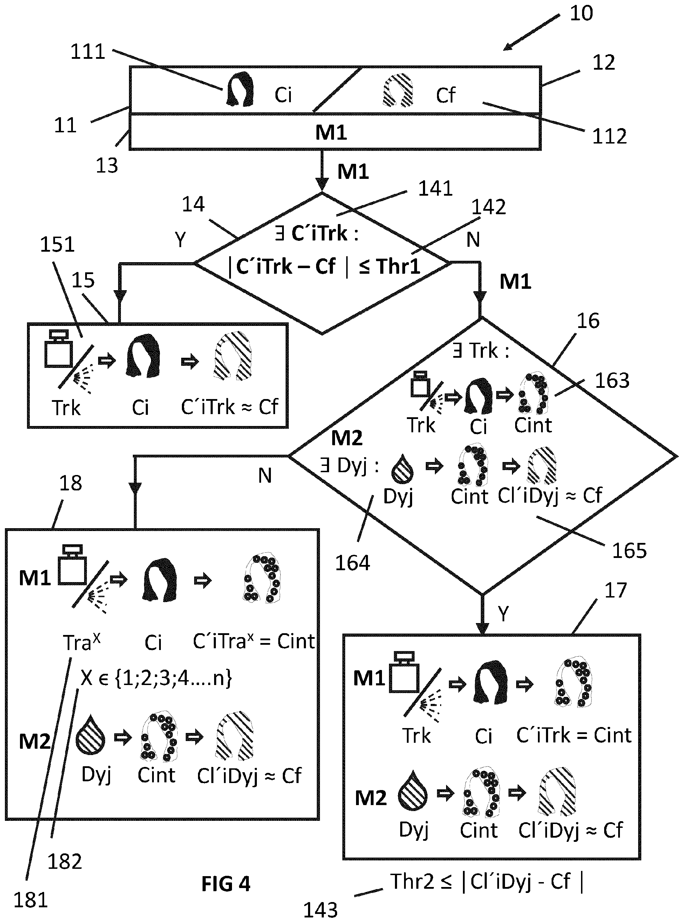

In the workflow represented on figure 3, model 2, M2 does not even need to be involved a smaller selection of known products (for example products known to be available) suitable for dyeing a lightened hair color can be sought and a full. It is however possible to further improve the method of the invention by using model 2, M2 in order to assist in finding hair dyeing treatments that can find more complex hair coloration treatments involving products the use of which on lightened hair colors has not yet been tested. Such a modified workflow is illustrated on figure 4.
In addition to what has been described above in connection with figure 3, the workflow of figure 4 determines an intermediate hair color 163 such that it is the second starting hair color within model 2, M2 and part of a matching set in which the second starting hair color is associated with a corresponding resulting hair color 165, CI'Dyj obtained after applying the corresponding at least one hair coloration treatment Dyj. The resulting hair color 165, CI'Dyj is such that it differs from the desired hair color 112 by less than the second amount 143 (which can advantageously be equal to the first amount 142).

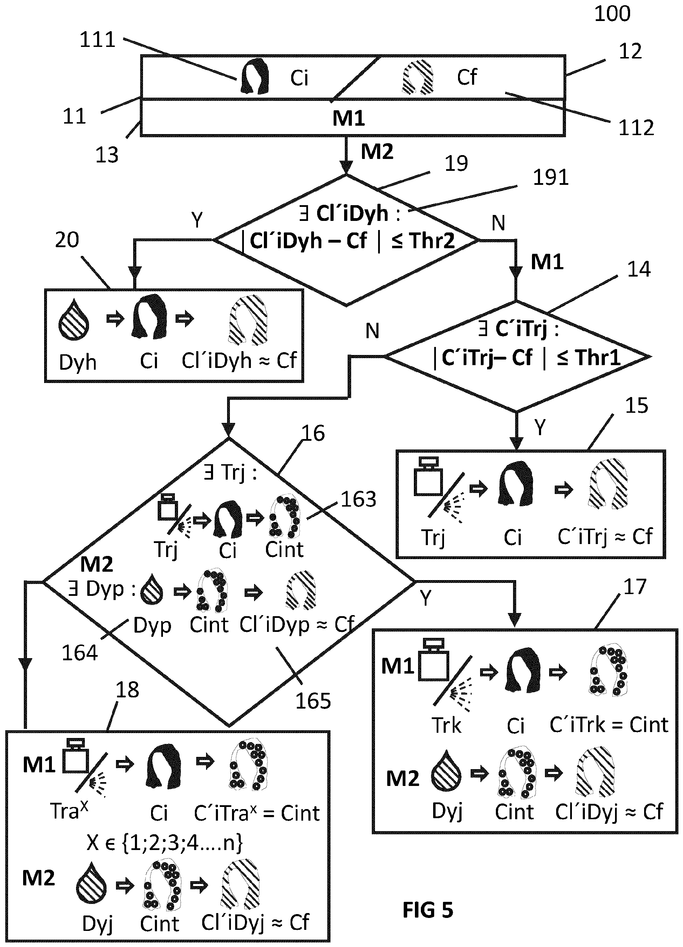

Figure 5 is a schematic representation of a further amendment to the workflow shown on figure 4. In addition to using both models 1, M1 and 2, M2, it is possible in the method 100 of figure 5 to first assess the possibility of dyeing hair into the desired hair color 112 without going through a hair lightening process. For that matter, a step 19 consists in first using model 2, M2 in order to check whether there is a dyed hair color 191, CI'iDyh achievable using a dyeing process Dyh such that the dyed hair color 191 is part of a matching set comprising the initial hair color 111 and the dyed hair color 191, and that the dyed hair color 191 differs from the desired hair color 112 by less than the second amount 143.
Indeed, it is possible that some dark hair colors can be lightened only by applying the right hair dye onto them. Possibly, a higher concentration of a suitable hair dye would need to be applied in order to lightened dark initial hair colors 111. In case such a dyed hair color 191 is found, a step 20 is triggered in which the hair coloration treatment that is recommended is the application of dye treatment Dyh onto the initial hair color 111 of the user. In case no such coloration journey can be identified with model 2, M2, the process described in the workflow of figure 4 is triggered from step 14 onwards.
It is to be further noted that although all the workflows described above tolerate an error margin between the desired hair color 112 and the achievable hair color determined using model 1, M1 or 2, M2, it is also possible to include an error margin between the initial hair color 111 and a first starting hair color 132 or second starting hair color 232. Accepting slight deviations in the starting hair color may still lead to acceptable achieved lightened and/or dyed hair colors. It may therefore be possible to seek a lightened or resulting hair color using model 1, M2 or 2, M2 that differs from the desired hair color by less than a first or second amount, and using as a first starting hair 132 color or second starting hair color a hair color 232 that differs from the initial hair color 111 by less than a third amount. This third amount may advantageously be smaller than or equal to the first and/or second amounts.

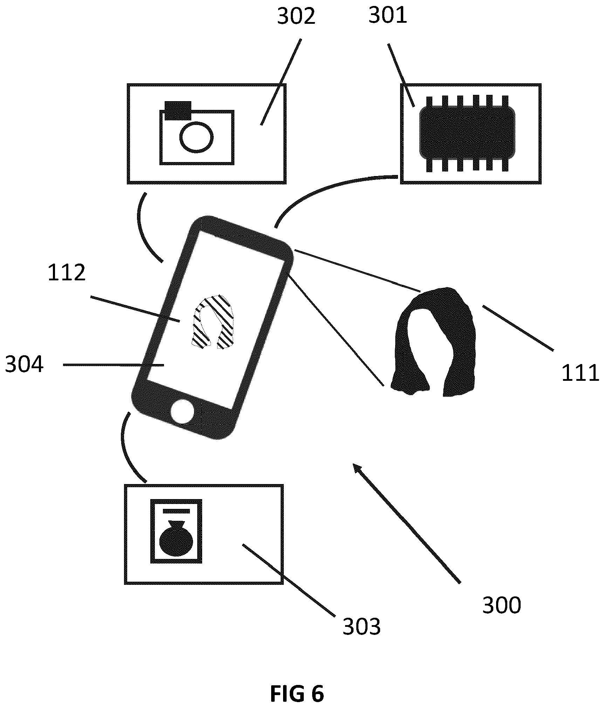

The methods described above may be implemented using portable devices forming a system such as the one schematically represented on figure 6.
Such a system 300 would typically comprise a user interface 304 for example in the form of a tactile screen such as the one found on a smartphone. It would also have a storage unit 303 comprising thereon a computer program comprising instructions to implement the method described above. The storage unit 303 interacts with a data processing unit 301 (or processor) which implements the steps of the method described above. The storage unit 303 and the data processing unit 301 may advantageously be part of a single hardware component. It is however also possible that the storage unit 303 is located remotely from the portable device comprising the user interface 304.
The user interface 304 allows user to provide inputs such as the desired hair color 112 or the initial hair color 111, and further information regarding their hair condition which can for example optionally be asked in a form to fill. These inputs are fed into the models 1, M1, 2, M2 used to assess the lightening and/or dyeing treatments best suitable to achieve the desired hair color 112. An optical sensor 302 can further advantageously be used to take pictures or videos of the user in order to display the desired hair color in a more realistic way or to process the images or videos acquired in order to determine the current hair color of the user.
Although the data processing unit 301, the user interface 304, the storage unit 303 and the optical sensor 302 may all be part of the same device, other embodiments can also be implemented. The storage and processing capabilities can be in wired or wireless connection with the portable device so that the portable device does not require additional storage or processing capabilities to implement the method of the invention. Processing of the information and access to the models can occur in a remote environment such as a cloud architecture or a distant service for example.

The methods and system described above comprise features that can be combined in different ways to form alternative embodiments to the examples that have been discussed. The scope of the invention is further defined by the appended claims.

## Claims

1. A method (10, 100) implemented by a processor for determining a hair coloration treatment adapted for changing hair of a user from an initial hair color (111) into a desired hair color (112), the method comprising:
- obtaining (11) the initial hair color of the user;
- obtaining (12) the desired hair color of the user;
- obtaining (13) a first model (1) for predicting hair color lightening results for at least one hair color lightening treatment (131), wherein the first model associates the at least one hair color lightening treatment with sets comprising each a first starting hair color (132) and a corresponding lightened hair color (133) achieved when applying the hair color lightening treatment onto hair having the first starting hair color;
- determining, using the first model, one among:
- a lightened hair color (141) achieved when applying the at least one hair color lightening treatment onto the hair of the user, wherein the lightened hair color differs from the desired hair color by less than a first amount (142); and
- an intermediate hair color (161, 163) obtained when applying the at least one hair color lightening treatment onto the hair of the user, wherein the intermediate hair color corresponds to a starting hair color for which there exists at least one first hair coloration composition (162,164) adapted for changing the starting hair color into a dyed hair color differing from the desired hair color by less than a second amount (143), and
- outputting the hair coloration treatment, wherein the hair coloration treatment comprises one among: a recommendation to apply the at least one hair color lightening treatment and a recommendation to apply the at least one hair color lightening treatment combined with the at least one first hair coloration composition.

2. The method of claim 1, further comprising:
- obtaining a second model (2) for predicting hair coloration results for a plurality of hair coloration compositions, wherein the second model associates each hair coloration composition (5) of the plurality of hair coloration compositions with sets comprising each a second starting hair color (232) and a corresponding resulting hair color (233) achieved when applying the hair coloration composition onto hair having the second starting hair color.

3. The method of claim 2, further comprising:
- determining the at least one first hair coloration composition using the second model, wherein the at least one first hair coloration composition is associated with at least one first matching set comprising the intermediate hair color of the user as the starting hair color and a resulting hair color differing from the desired hair color by less than a second amount (143).

4. The method according to any one of the preceding claims, wherein the first model further associates the at least one hair color lightening treatment with sets comprising each the first starting hair color and a corresponding lightened hair color achieved when applying the hair color lightening treatment onto hair having the first starting hair color more than once.

5. The method according to any one of the preceding claims, wherein the first model further associates the at least one hair color lightening treatment with at least one application parameter for applying the at one least hair color lightening treatment, wherein each of the at least one recommendation for applying the at least one hair color lightening treatment is associated with a set comprising each the first starting hair color and a corresponding lightened hair color achieved when applying the hair color lightening treatment onto hair having the first starting hair color.

6. The method according to claim 5, wherein the at least one application parameter for applying the at least one hair color lightening treatment comprises one among:
- a duration of application of the at least one hair color lightening treatment onto hair of a user;
- an amount of active agent applied onto hair of a user during the hair color lightening treatment.

7. The method according to any one of the preceding claims, wherein the hair color lightening treatment is at least one among: application of a hair bleaching (3) agent and exposure (4) of hair to ultraviolet light.

8. The method of claim 7 when dependent on claim 6, wherein the active agent is one among a hair bleaching agent and ultraviolet light with wavelengths comprised between 100 nm and 400 nm.

9. The method according to any one of the preceding claims, dependent on claim 4, further comprising:
- upon determining that more than one hair coloration treatment enables changing the initial hair color or the intermediate hair color into the desired hair color, selecting the hair coloration treatment comprising a lowest number of hair color lightening steps.

10. The method according to any one of the preceding claims, further comprising:
- upon determining that more than one hair coloration treatment enables changing the initial hair color or the intermediate hair color into the desired hair color, selecting the hair coloration treatment which achieves a hair color differing from the desired hair color by a smallest amount.

11. System (300) for determining a hair coloration treatment adapted for changing hair of a user from an initial hair color (111) into a desired hair color (112), the system comprising:
- a user interface (304) configured to receive as an input the initial hair color of the user and the desired hair color of the user;
- a data processing unit (301) configured to store and run a program involving a first model (1) for predicting hair color lightening results for at least one hair color lightening treatment (5), wherein the first model associates the at least one hair color lightening treatment with sets comprising each a first starting hair color (132) and a corresponding lightened hair color (133) achieved when applying the hair color lightening treatment onto hair having the first starting hair color;
wherein the data processing unit determines, using the inputs received from the user interface and the program, one among:
- a lightened hair color achieved when applying the at least one hair color lightening treatment onto the hair of the user, wherein the lightened hair color differs from the desired hair color by less than a first amount; and
- an intermediate hair color obtained when applying the at least one hair color lightening treatment onto the hair of the user, wherein the intermediate hair color corresponds to a starting hair color for which there exists at least one first hair coloration composition (162,164) adapted for changing the starting hair color into a dyed hair color differing from the desired hair color by less than a second amount (143), and
wherein the data processing unit further outputs the hair coloration treatment, wherein the hair coloration treatment comprises one among: a recommendation to apply the at least one hair color lightening treatment and a recommendation to apply the at least one hair color lightening treatment combined with the at least one first hair coloration composition.

12. The system according to claim 11, further comprising at least one optical sensor (302) configured to determine the initial hair color of the user from one among a picture of the user or a video stream of the user.

13. Computer program product comprising instructions for executing a method (10, 100) for determining a hair coloration treatment adapted for changing hair of a user from an initial hair color into a desired hair color, the method comprising:
- obtaining the initial hair color (111) of the user;
- obtaining the desired hair color (112) of the user;
- obtaining a first model (1) for predicting hair color lightening results for at least one hair color lightening treatment (5), wherein the first model associates the at least one hair color lightening treatment with sets comprising each a first starting hair color (132) and a corresponding lightened hair color (133) achieved when applying the hair color lightening treatment onto hair having the first starting hair color;
- determining, using the first model, one among:
- a lightened hair color achieved when applying the at least one hair color lightening treatment onto the hair of the user, wherein the lightened hair color differs from the desired hair color by less than a first amount (142); and
- an intermediate hair color obtained when applying the at least one hair color lightening treatment onto the hair of the user, wherein the intermediate hair color corresponds to a starting hair color for which there exists at least one first hair coloration composition (162,164) adapted for changing the starting hair color into a dyed hair color differing from the desired hair color by less than a second amount (143), and
- outputting the hair coloration treatment, wherein the hair coloration treatment comprises one among: a recommendation to apply the at least one hair color lightening treatment and a recommendation to apply the at least one hair color lightening treatment combined with the at least one first hair coloration composition.
